# EUROPEAN PATENT APPLICATION

(11) **EP 2 105 871 A1**
(43) Date of publication of application: **30.09.2009**
(21) Application number: 08159017.6
(22) Date of filing: 25.06.2008
(51) Int. Cl.: G06Q 10/00, H04L 12/18, H04M 3/527

(54) **Managing context**

(30) Priority: 27.03.2008 US 79519
(71) Applicant: Mitel Networks Corporation, Ottawa, Ontario K2K 2W7 (CA)
(72) Inventor: Trinh, Trung (Tim), Nepean Québec K2G 0Z5 (CA); Gray, Tom, Fort-Coulonge Québec J0X 1V0 (CA)
(74) Representative: Derry, Paul Stefan

(57) **Abstract**

A method, system and apparatus of managing context is provided. In particular keeping track of communication events such as telephone calls, email exchanges, instant messaging events using a piece of software. A current context is determined. It is determined if a context object associated with the current context exists in a shared memory i.e. a database, tuple space and, if not, the context object is created in the shared memory. Data associated with the current context is collected while the current context is active. Data associated with the current context is stored in the context object associated with the current context.

## Description

The specification relates generally to communication systems, and specifically to a method, system and apparatus for managing context.

The work of an enterprise (e.g. a business and/or organization) may be divided into formal and informal parts. The formal work is prescribed by business processes.
The informal work is to manage these processes. However, personnel (e.g. managers) often find it challenging to manage information about the multitude of issues addressed on a daily basis, and further may find collaborating with colleagues in these matters challenging.

For example, personnel often need to partition their attention across many issues of varying urgency in an organization, and they must often function outside of normal formal business processes and workflows, addressing and resolving issues as they arise, often on piecewise basis. It becomes very challenging to track the various issues being managed. In a specific example, in a single conversation, two members of an organization may discuss/manage several different issues that may or may not be interrelated. Further, the consideration of a strategic issue may have to be deferred to deal with an urgent issue that is (e.g.) stopping production or alienating a customer. In these situations, personnel will not typically have the luxury of planning a schedule so as to be able to carefully prepare for each task. Rather they must be able to dynamically assess a situation and render attention to the most currently important issues, setting priorities among competing requests for higher attention to deal with the most pressing matters. In doing so, personnel will often be shifting attention from one matter to another, and hence members of an organization must be able to become quickly familiar with the new issue. Further, they must be able to refresh their memory about a matter that has been put aside and to become aware of developments that have occurred since it was last taken up.

While Customer Relationship Management (CRM) systems do address some of these problems however, they are largely directed to maintaining a relationship with a customer: when a customer calls, an agent is provided with a screen pop yields tombstone (name, address, etc.) data along with a history of the customer's prior interactions with the organization, such as prior purchases or interactions to resolve issues. The agent is further provided with a script based on these prior interactions. While this information assists the agent with handling the call, the agent is generally not being asked to judgement calls in relation to the business context of the customer: in other words, the CRM is assisting largely with formal processes, but not informal processes. Neither does the CRM assist the agent with managing issues within the organization.

A first aspect of the specification provides a method of managing context. The method comprises determining a current context. The method further comprises determining if a context object associated with the current context exists in a shared memory and, if not, creating the context object in the shared memory. The method further comprises collecting data associated with the current context while the current context is active. The method further comprises storing the data associated with the current context in the context object associated with the current context.

Determining the current context may be based on at least one of a communication session, a location and a schedule. When determining the current context is based on a communication session, determining the current context may comprise determining a context of at least one previous communication session between two users associated with the communication session.

Determining the current context may be based on input data received via an input device, in response to a computing device controlling a display device to display a representation of a request for current context. The request for current context may comprise a list of at least one potential current context, the list of at least one potential current context determined by processing at least one existing context object in the shared memory, and input data comprises a first selection from the list. The method may further comprise receiving input data indicative that a second selection from the list is to be deleted, and in response deleting a context object associated with the second selection. The request for current context may comprise a request to enter a name of the current context, and input data comprises textual data comprising the name.

Determining the current context may be based on a context header in an invitation to a communication session. The invitation may comprise a SIP invitation.

Determining current context may comprise determining a best guess of the initial current context.

Determining current context may comprise receiving an indication of context from an automated system enabled to create a context to assist the automated system with scheduling actions of at least one user.

The shared memory may comprise at least one of a database and a tuple space, and the determining the current context may be based on assertions stored in the shared memory.

Collecting data associated with the current context while the current context is active may comprise at least one of collecting data associated with at least one of communications that occur while the current context is active, documents generated while the context is active, a location of a user while the current context is active, activities of the user while the current context is active, and identifiers of other users co-located with the user while the current context is active.

The method may further comprise determining if the current context is active. Determining if the current context is active may comprise monitoring an input device to determine if input data has been received, the input data indicative that context has changed from the current context to a new current context and, in the absence of the input data, determining that the current context is active.

The method may further comprise: determining if context has changed from the current context to a new current context; determining if a new context object associated with the new current context exists in the shared memory and, if not, creating the new context object in the shared memory; collecting data associated with the new current context while the new current context may be active; and storing the data associated with the new current context in the new context object associated with the new current context. Determining if context has changed from the current context to a new current context may comprise monitoring an input device to determine if input data has been received, the input data indicative that context has changed from the current context to the new current context.

The method may further comprise receiving a request for data associated with the current context, and in response providing data stored in the context object.

The method may further comprise synchronizing the context object with at least one associated context object, the context object stored at a first computing device in a network and the at least one associated context object stored at a second computing device in the network. The network may comprise a P2P network.

A second aspect of the specification provides a system for managing context. The system comprises a shared memory for storing context objects, each context object comprising data associated with a given context. The system further comprises at least one computing device in communication with the shared memory. The computing device comprises: a communication interface enabled to communicate with the shared memory via a communications network; and a processor. The processor is enabled for: determining a current context; determining if a context object associated with the current context exists in the shared memory and, if not, creating the context object in the shared memory; collecting data associated with the current context while the current context may be active; and storing the data associated with the current context in the context object associated with the current context.

The shared memory may comprise at least one of a database and a tuple space.

The system may further comprise at least one knowledge source agent for processing data associated with at least one of a communication session, a location and a schedule to assist in the determining the current context.

The computing device may be coupled to an input device for receiving input data and a display device for displaying a representation of the current context and a representation of a list of potential current contexts, wherein the current context can change to a potential current context by receiving input data via the input device, the input data comprising a member of the list.

A second aspect of the specification provides a computing device for managing context. The computing device comprises a communication interface enabled to communicate with the shared memory via a communications network; and a processor. The processor is enabled for: determining a current context; determining if a context object associated with the current context exists in the shared memory and, if not, creating the context object in the shared memory; collecting data associated with the current context while the current context may be active; and storing the data associated with the current context in the context object associated with the current context.

Embodiments are described with reference to the following figures, in which:
Fig. 1 depicts a schematic diagram of interactions of users within an organization, according to a non-limiting embodiment;
Fig. 2 depicts a system for managing context, according to a non-limiting embodiment;
Fig. 3 depicts a user interface for managing context, according to a non-limiting embodiment; and
Fig. 4 depicts representation of a context manager, according to a non-limiting embodiment;
Fig. 5 depicts a method for managing context, according to a non-limiting embodiment;
Figures 6 through 11 depict views of a GUI of an application for managing context, according to a non-limiting embodiment.

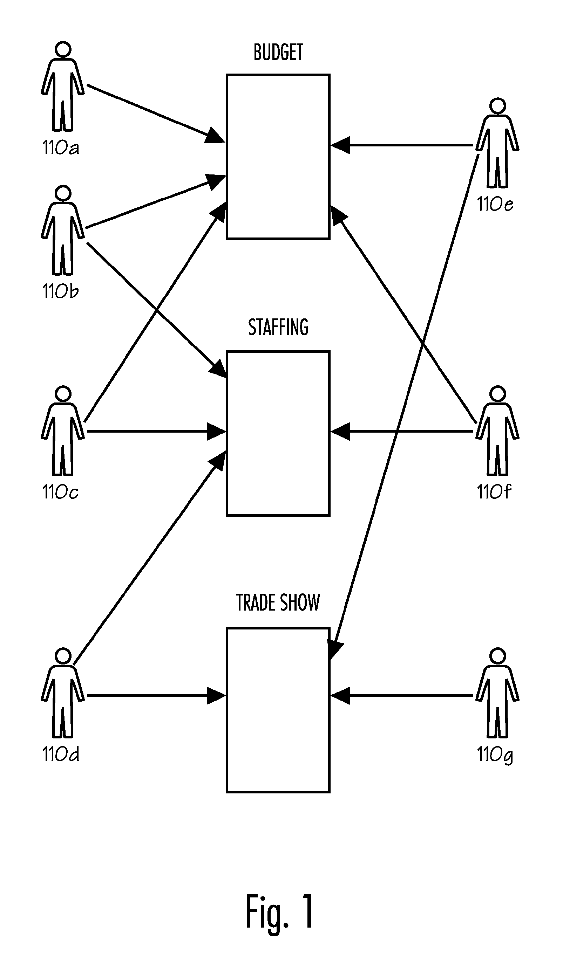

Figure 1 depicts a schematic diagram of interactions of users 110a, 110b, 110c, etc. (generically a user 110 and collectively users 110) in an organization during a possible workday, the users 110 being employees and/or managers of an organization or business, to illustrate that the users 110 do not work in isolation on individual topics or contexts. Rather they generally work in informal groups that address separate topics or contexts. Hence, each user 110 will spend each day working within different contexts within the organization, a context comprising the data associated with the purpose, behaviour, capability, and history of such groups. A user 110 may be working within several contexts simultaneously and/or consecutively. For example, the user 110b is working within the contexts of both "budget" and "staffing", collaborating with the users 110a, 110c, 119e and 110f on "budget", and collaborating with the users 110c, 110d and 110f on "staffing". During a communication with the user 110c, such as a telephone call or a chat session, the context may start with "budget", shift to "staffing", and back to "budget". During such a communication, various documents may be produced, e-mails generated and sent etc., each associated with a different (or sometimes overlapping) context. Further, during a given workday, some of these contexts will be at the back of the mind of a user and may not be given any degree of attention. Other contexts will be given more attention and one or more contexts will generally be a current context that will have the full attention of the user 110.

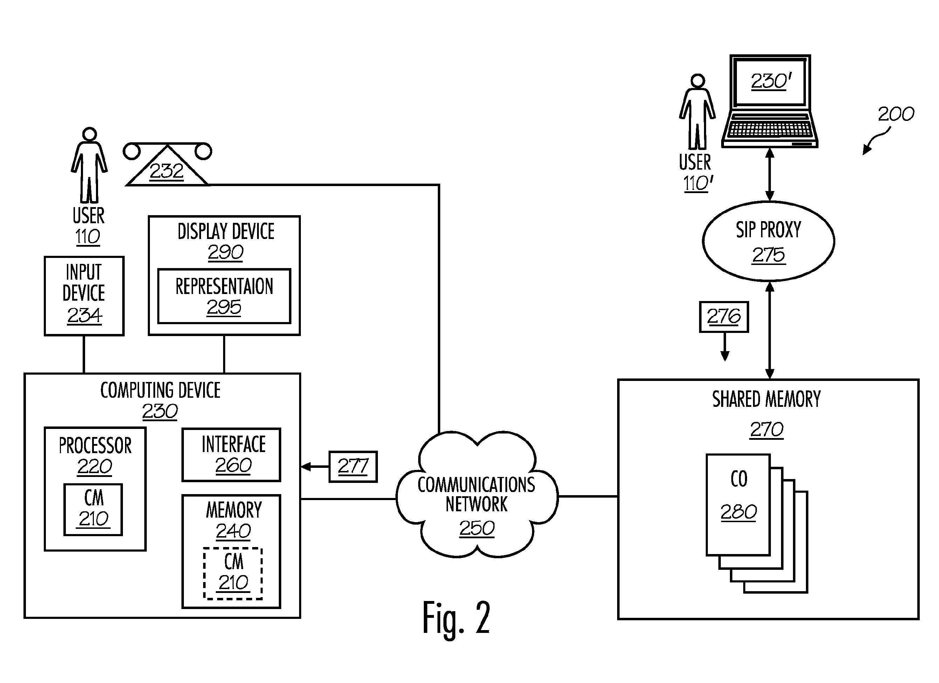

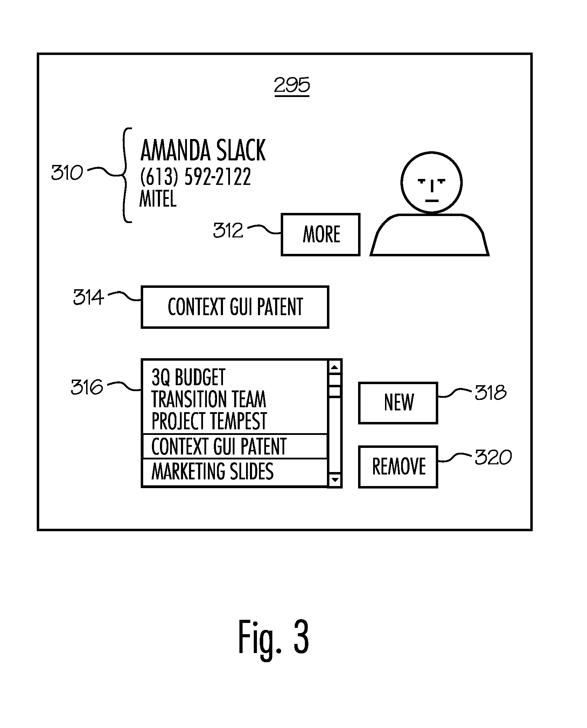

Figure 2 depicts a block diagram of a system 200 for managing context, comprising a Context Manager (CM) 210 associated with a user 110, the CM 210 comprising an application processed by a processor 220 of a computing device 230. In some embodiments, the computing device further comprises a memory 240 for storing the CM 210. The computing device 230 is enabled to communicate via a communications network 250 via a communications interface 260. The CM 210 is hence in communication with a shared memory 270. In some embodiments, the shared memory 270 comprises a database, while in other embodiments, the shared memory comprises a tuple space, described below. In general the shared memory 270 is enabled for storing context objects (CO) 280 (generically a CO 280 and collectively COs 280), each CO 280 associated with a different context. While COs 280 are described further below, in general each CO 280 comprises an identifier of the context with which it is associated, and data associated with the context, including but not limited to user(s) 110 associated with the context. The computing device 230 is further coupled to a display device 290, such as a flat panel display (e.g. an LCD) or a CRT, and the computing device 230 is enabled to control the display device 290 to display a representation 295 of a portion of the CM 210. In some embodiments, the representation 295 comprises a graphical user interface (GUI) to the CM 210, as depicted in Figure 3 and described below. In some embodiments, the computing device 230 may be local to the user 110, for example a personal computer, work station or laptop computer. In other embodiments, the computing device 230 may be remote from the user 110, for example as in a client/server computing architecture.

The system 200 also generally comprises an input device 234 coupled to the computing device 230 for receiving input data from the user 110. The input device 234 may comprise a keyboard, a pointing device, a touchscreen, or a combination.

The communications network 250 comprises any desired combination of wired or wireless computing networks, in including a LAN, a WAN, the Internet, the PSTN, a WiFi Network, a WiMax network, a cell network (e.g. CDMA, GMS, 1x,), and the like. The interface 260 is generally enabled to receive and transmit communications via the communications network 260.

The CM 210 is generally enabled to supply the current context on which the user 110 is focussed, via the representation 295. Hence, the CM 210 assists the user 110 at becoming more productive and efficient. Further, the CM 210 assists the user 110 with associating various aspects of a workday with contexts. Each of the user's current contexts (which changes through-out a work day, as in Figure 1) is associated with a CO 280 stored at the shared memory 270, one for each context. Thus CM 210 is also generally enabled to process, create, delete and update COs 280 via communications with the shared memory 270, as described below.

In some embodiments, the system 200 further comprises a SIP proxy 275 (e.g. a computing device for handling SIP communications), the shared memory 270 in communication with the SIP Proxy 275. The SIP proxy 275 is enabled to issue an invitation 276 for collaboration to the user 110 (e.g. via the computing device 230 or an optional communications device 232 associated with the user 110, such as a SIP enabled telephone,) the invitation 276 generally comprising a SIP Invite for a VOIP Call, an IM session etc., as known to one of skill in the art. The invitation 276 will generally be issued when a request for communication (which, in some embodiments, also comprises a SIP invite) arrives at the SIP proxy 275 from another user (e.g. a communication device 230' associated with another user 110', the communication device 230' generally similar to the communication device 230).

In some embodiments, as depicted, the invitation 276 is issued via the shared memory 270, which in turn issues a new call message 277 to the CM 210. While the SIP proxy 275 is depicted in Figure 2 as being in direct communication with the shared memory 270, it is understood that the SIP proxy 275 may be in communication with the shared memory 270 via the communications network 250 (or another communications network) and that the SIP proxy 275 is in further communication with the computing device 230 and/or the communications device 232. Hence, in these embodiments, the shared memory 270 is enabled as a message router. However, in other embodiments, a new call message 277 may be transmitted via a hard-wired connection. In yet other embodiments, a new call message 277 may be transmitted via any suitable event system or publish/subscribe system. For example, a new call message 277 may be transmitted in a manner similar to packet forwarding inside of a router as known to a person of skill in the art: packets are forwarded based on the contents of their address field. The shared memory 270 (such as a tuple space, or other types of shared memories) may be generally enabled in a similar manner. In other embodiments, the shared memory 270 may be enabled to forward data based on the contents of other fields.

In any event, Figure 2 further depicts a non-limiting example of a situation in which context may be managed via the CM 210. When the message 277 is received by the CM 210, the computing device 230 controls the display device 290 to display the representation 295, if not already displayed, for viewing by the user 110. A non-limiting embodiment of the representation 295 is depicted in Figure 3. In this embodiment, the representation comprises tombstone information 310 about the other user 110' making the collaborative invitation. Tombstone information 310 may comprise, but is not limited to the name, affiliation and contact address of the other user 110'. In some embodiments, the tombstone information 310 further comprises a MORE button 312, with which the user 110 may interact with the input device 232 such that when the MORE button 312 is activated, additional information about the other user 110' may be presented, such as the other user's 110' job title, physical location etc. The representation 295 further comprises a Current Context Box (CCB) 314, for displaying the current context of the communication between the user 110 and the other user 110', and specifically an identifier of the current context, the identifier stored in a CO 280 associated with the current context. In one embodiment, the identifier comprises a name that the originator of the current context has assigned to the current context. Determination of current context is described below.

As depicted in Figure 1, it will be a common occurrence for the users 110 to be involved in multiple contexts with a collaborator, such as the other user 110'. It will also be common for a collaborative session, such as telephone call and/or an IM session, to move among many contexts sequentially. The context in which a collaborative session begins will often be only the first of several topics of conversation. Hence, the CM 210 is further enabled to allow the user 110 to shift contexts via an interaction with the representation 295. For example, in the depicted embodiment of Figure 3, the representation 295 further comprises an All Context Box (ACB) 316, which displays a list of identifiers of potential contexts of the collaborative session, which the user 110 may choose from via an interaction with the input device 234.

To compile the list displayed in the ACB 316, the CM 210 will scan the COs 280, (e.g. via requests for information transmitted to the shared memory 270), looking for all contexts associated with the user 110 and/or the other user 110'. For example, the CM 230 requests the identifiers of contexts in COs 280 which are associated with the user 110 and/or the other user 110', and the list is compiled from these identifiers. The user 110 can select one of identifiers in the list to be the current context. For example, via the input device 234, the user 110 can click on an identifier or drag an identifier to the CCB 314. The identifier of the context will then be displayed in the CCB 314, and the CM 210 will understand the current context to be the context associated with the identifier displayed in the CCB 314. The effect of this on the CO 280 associated with this context will be described below.

In some embodiments, the CM 210 is further enabled to allow the user 110 to define a new context for participation via an interaction with the representation 295. For example, in some of these embodiments, the representation 295 comprises a New Context Button (NCB) 318. Upon activating the NCB 318, for example via the input device 234, the user 110 will be prompted to enter an identifier (e.g. a name) for the new context, for example via a pop-up screen. The identifier of the new context will be displayed in the ACB 316. Furthermore, the CM 210 will cause a new CO 280, associated with the new context, to be added to the shared memory 270. At a minimum, the new CO 280 will comprise the identifier of the new context, and an identifier of the user 110 who caused the new CO 280 be created (e.g. a name, an employee number, a phone number etc.). In some embodiments, the new CO 280 will also comprise an identifier of the other user 110' participating in the communication session with the user 110 when the new CO 280 was created.

In some embodiments, the CM 210 is further enabled to allow the user 110 to remove a context for participation from the list displayed in the ACB 316 and/or the context associated with the identifier displayed in the CCB 314, via an interaction with the representation 295. For example, in some of these embodiments, the representation 295 comprises a Remove Context Button (RCB) 320. Upon activating the RCB 320, for example via the input device 234, a highlighted context will be removed the list and/or the CB 314. For example, the user 110 may highlight the identifier of a context displayed in the list and/or the CCB 314 by clicking on the identifier via the input device 234 (e.g. in the depicted embodiment, "CONTEXT GUI PATENT" is highlighted). In some embodiments, the CM 210 will cause the CO 280 associated with the deleted context, to be deleted from the shared memory 270. This feature can be used to delete references to a context that is no longer of use.

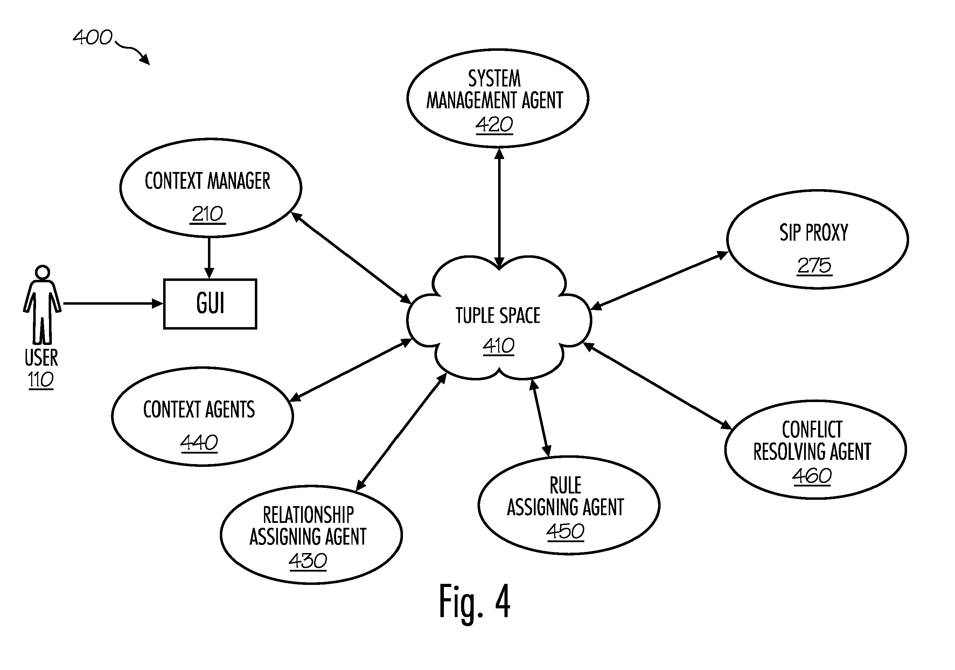

The COs 280, and the updating of COs 280, will now be described. As indicated above, the user 110 will be operating in multiple contexts with one or more other users 110. Each of these contexts may be related to an enterprise objective. It is hence desirable and beneficial to assist the user 110 in focussing their attention within a specific context, particularly when they are interrupted by a call or other communication attempt when doing other tasks. Hence, via the CCB 314 of the representation 295 of the CM 210, the user 110 can indicate which context is a current context. Alternatively, the system 200 may determine the current context. This is described in more detail below with reference to Figure 4. Data associated with the current context is then collected while the current context is active. The data associated with the current context is stored in the CO 280 associated with the current context. Data associated with the current context may include data associated with communications that occur while the current context is active, documents generated while the context is active, a location of the user 110 while the current context is active, activities of the user 110 while the current context is active, and identifiers of other users 110 co-located with the user 110 while the current context is active. A system for collecting certain types of data associated with a current context is described below with reference to Figure 4.

In some embodiments, data associated with the current context stored in a CO 280 may comprise a reference to data. For example, if a document is generated by the user 110 while the current context is active, the data associated with the current context may comprise a reference to the document (e.g. a network address, a location on a hard-drive, and the like), rather then the document itself.

Hence, by saving data associated with a given context in a CO 280, while the given context is the current context, at a later time the user 110 can quickly be brought up to date with the given context by consulting the data stored in the CO 280. For example, when the context of the user 110 shifts between contexts several times in day, at some point in the day the given context may again become the current context, and hence the user 110 has a record of data available that enables the user 110 to quickly refresh themself on the given context.

In some embodiments, the data stored in the CO 280 is made available to supporting applications that assist the user 110 in shifting their attention, for example by causing certain views of a context to be displayed, such as all e-mails associated with a context.

Attention is now directed to Figure 4, which depicts system 400 for managing context, according to a non-limiting embodiment. In some embodiments, the system 200 described above is a subset of the system 400, with like elements having like numbers, in which the shared memory 270 comprises a tuple space 410. A tuple space is generally a type of database in which various assertions (known as tuples) about a state of the user 110 and/or a state of apparatus and systems associated with the user 110 may be posted, including current and previous contexts in the form of the COs 280.

The system 400 is generally adapted from the Applicants co-pending application "Context Aware Call Handling System", U.S. Ser. No. 10/631,834, filed on August 1, 2003 and incorporated herein by reference, which describes the operation of a context-aware call handling system. Present embodiments use the basic structure described in Applicants co-pending application U.S. Ser. No. 10/631,834 for managing context and determining a current context. The basic structure is a blackboard system surrounded by knowledge sources that collect and process contextual information associated with the user 110 such that a general user context can be identified and within which incoming call attempts can be situated. However, system 400 extends this concept by providing for the possibility of one or more specific contexts within each of which specific objectives can be supported.

System 400 comprises a tuple space 410 to maintain general context and a plurality of knowledge source agents 420-460, described below, which are in communication with the tuple space 410. The context is specified by one or more assertions made by one or more of the knowledge source agents 420-460, that are stored in the tuple space 410, for example as tuples, as known to a person of skill in the art. Some of these tuples are long lived. An example of this would be user role relationships between users 110 (e.g. boss - salesman). Some assertions will be short-lived. Examples of this would be a location of a user 110, which could change on a minute by minute basis. The different contexts may be stored in the tuple space 410 as a CO 280. While COs 280 are not depicted in Figure 4, it is understood that the COs 280 are stored in the tuple space 410, as in the shared memory 270 of Figure 2.

All of these assertions are placed in the tuple space 410 by one of the knowledge source agents 420-460 that surround it, or another knowledge source agent as will occur to one of skill in the art. Not all knowledge source agents 420-460 will be able to interpret all contextual assertions. Rather the knowledge source agents 420-460, which need to understand and determine an assertion, will be provisioned with the syntax of the proper assertions. The semantics of an individual assertion can, and likely will, be different for each knowledge source 420-460. Each knowledge source agent 420-460 may use its own semantics to interpret assertions to its own purpose. Hence, a CO 280 need not be strongly structured. Rather, in some embodiments, a CO 280 is semistructured such that items of data stored in the CO 280 will be identified so that applications which need the data may find it. Further, not all applications using the CO 280 need understand all of the data contained within the CO 280. This aids interoperability and evolvability.

In a specific non-limiting embodiment, data associated with a specific context may be stored in a CO 280 as assertions associated with the specific context. For example, and identifier for a context may be stored in the CO 280 as a key value pair that identifies the context (e.g. at the beginning of the CO 280). This could be of the form:

<Context><123456>
which identifies the specific context 123456.

Representation a context within a CO 280 may be tree-based, with specific areas of the CO 280 reserved for specific types of data. Among the data that can be stored within a CO 280 are:
a) Name of a context
b) Purpose of a context
c) Participants in a context
d) Communication attempts in a context

As another example within the communication attempt category could be a category in which annotations on the communication attempt could be stored.

For example, the assertion for this would be:
<Context> < 123456>
<Communication_Attempt. <314159>
<Annotation> <Discussing UK product launch>

In some embodiments, an identifier for a communication attempt (i.e. "314159" in the above example) may be assigned by a call-processing agent, such as the SIP proxy 275 in the architecture of Figure 4. The identifier for the communication attempt identifies a specific call attempt. In some embodiments, there may be many such identifiers within a context.

The caller in this communication attempt, for example the other user 110' in Figure 2, may also be identified with the assertion:
<Context> <123456>
<Call_Attempt> <314159>
<Participant> Amanda Slack@mitel.com

As indicated above, the user 110 may interact with the CM 210 which assists the user 110 in shifting between multiple contexts, via the representation 295, as described above, and further the CM 210 may determine a current context. This will now be described within the framework of the system 400. The SIP proxy 275 (or alternatively a PBX) will receive an incoming call. Using a common gateway interface (CGI), or some other service, the SIP proxy 275 will place assertions about the call within the tuple space 410. In case of a traditional PBX, this may be limited to calling line ID (CLID) and dialled number (from DNIS -dialled number information service). However using SIP or a similar protocol can result in more specific data being supplied, such as call subject, urgency, etc. The result is that the tuple space 410 will now contain a number of assertions that describe the call.

The knowledge source agents 420-460 will now be described. In general, the knowledge source agents 420-460 do not have to be installed on a particular computing device, but can be distributed over a network of computing devices, which have access to the a server processing the tuple space 410 (i.e. a server which comprises a shared memory where the tuples are stored and processed). The knowledge source agents 420-460 will have access to various evidentiary sources that can be used to make surmises about user context. Examples of evidentiary source include, but are not limited to:
1. Contents of a user's calendar
2. Contents of other users' calendars
3. Socially aware observations and surmises from the user's current context
4. User declarations

A System Management Agent (SMA) 420 synchronises the behaviour of the other agents 430-460 surrounding the tuple space 410 in regard to the handling of communications (e.g. telephone calls, SIP requests, etc.) and determining contextual data. The SMA 420 will trigger the agents 430-460 at the appropriate time to evaluate the information currently in the tuple space 410 and to make further assertions that collectively describe a communication. Specifically the Relationship Assigning Agent (RAA) 430 and one or more Context Agents 440 will be triggered to evaluate the current assertions and relate an incoming communication to the current context of the user 110. In some embodiments, each client (e.g. such as the computing device 230) is associated with a SMA 420.

The Relationship Assigning Agent (RAA) 430 is generally enabled to respond to a relationship-assigning request from an SMA 420. The request from the SMA 420 generally contains caller and receiver information. The RAA 430 assigns the relationship between the user 110 and the caller, for example according to a buddy-list of the user 110 or according to another list of relationship data, for example a company organizational chart.

One or more context agents 440 are enabled to monitor the activity of users 110. For example, the context agents 440 may determine where the users 110 are, who they are with etc., and make assertions about context to the tuple space 410. Hence the context agents 440 may have access to a schedule of the user 110, a location determining device associated with the user 110 (e.g. a GPS device enabled for wireless communication), webcams, keyboard activity detection agents etc. This data may be stored at a CO 280 associated with the current context, while the current context is active.

The Rule Assigning Agent 450 is enabled to extract matching user rules according to the conditions of each rule and the current context, and assign them to a relevant data field for call processing and determination of context.

A Conflict Resolving Agent (CRA) 460 is enabled to resolve conflicts that might be present in the assigned rules.

Again, by context, it is meant where the user 110 is, and/or what the user 110 is doing, whom the user 110 is with and what can be deduced from this data. The "what" and the "who" of context may go beyond raw data, however. The Context Agent 440 may contain IF-Then rules or policies that relate more concrete facts to more abstract concepts. For example, if a location aware context agent 440 determines that the user 110 is in a specific room (say 603-1), a context agent rule may identify room 603-1 as a meeting room and make an assertion about the user 110 being within a meeting room, and further that the user 110 is in a meeting. This data may then be saved in the CO 280 associated with current context, while the current context is active.

Similarly the RAA 430 has a plurality of rules that can take evidence about a call and relate the caller with the user 110. For example, rules may relate the calling number (e.g. 613-592-2122 as in Figure 3) to being the telephone number of a specific person (e.g. Amanda Slack, also as in Figure 3). In turn, other rules can relate the caller to being the supervisor of the user 110. This data may then be saved in the CO 280 associated with current context, while the current context is active.

Thus the interoperation of the context agent 440 and the Relationship Assigning Agent 430 can take some of the cursory information available with an incoming call (e.g. the CLID) and fit the call into the current context of the user 110. Further, the data associated with the call may be saved to the CO 280 associated with the current context. So a call from (613) 592-2122, which intrinsically provides only limited guidance, is transformed into a call from the supervisor of the user, while the user 110 is in a meeting room. Such data stored in the CO 280 may be later retrieved by the user 110 and to assist the user 110 in remembering events and other data associated with a specific context. Other information may also be supplied and manipulated by rules. For example, who the user 110 is with while a current context is active, the subject of a call or communication that occurs while a current context is active, the documents that the user is working on while a current context is active. Together the data, and derived assertions, fit the call into the user's current working and social context.

Using these assertions, the Rule Assigning Agent 450 will determine which of the policies that are supplied to the system 400 are appropriate to the current communication. Typically, multiple rules will apply to a call. The CRA 460 will then determine which rule should have priority. It will then supply this to the SIP proxy 275 (or PBX) for action.

As depicted, the CM 210 will also be in communication with the tuple space 410, and further, in this embodiment, the COs 280 associated with a user 110 are stored as sets of assertions within the tuple space 410. The CM 210 will have access to and be able to interpret the assertions in the COs 280, as well as assertions that the CRA 460 uses to instruct the SIP proxy 275 for action.

When an incoming communication occurs, the CM 210 can be triggered in sequence by the SMA 420 to understand that the CRA 460 (or another knowledge source agent) will be placing an assertion for action in the tuple space 410. The CM 210 will detect that that this assertion is directing the SIP proxy 275 to send the communication directly to the user 110 (e.g. to the computing device 230 and/or the communication device 232). The CM 210 will also be able to determine from assertions in the tuple space 410 a user 110' associated with the incoming communication is (e.g. Amanda Slack in the example). The CM 210 will then scan COs 280 residing within the tuple space 410 for an association with the user 110' (that is whether they are in a participant list of a particular CO 280, which is associated with the user 110). The CM 210 will then display data associated with the user 110' in the tombstone information 310 of the representation 295 of Figure 3, and names of contexts associated with the user 110' will be extracted from the appropriate assertion within the COs 280 and displayed in the ACB 316 of Figure 3.

In some embodiments, the current context of the user 110 may also be determined via the system 400. Further, when the current context is determined, an identifier of the current context may be stored as an assertion within the context of the user 110 in the tuple space 410.

In some embodiment, current context may be determined through the addition of a context header to a SIP INVITE message, within the SIP protocol. The context header will contain an identifier of the context of the communication and hence the current context of the user 110 (presuming the communication is accepted). The content of the context header will be supplied to the tuple space 410 by the SIP proxy 275 as part of the invitation process. If the CM 210, while processing an invitation, finds a valid context identifier within it, it will set this context as the current context for the user. That is, within the tuple space 410, it will set the Current Context Assertion to this context, and display the context's identifier in the CCB 314 of Figure 3. If the context header in the contains an identifier of a context which is not found within the contexts whose COs 280 are in the tuple space 410, the CM 210 will assume that a new context is to be created, and hence a new CO 280. Thus, the CM 210 will trigger the creation of a new CO 280 for that context in the tuple space 410 and will then carry on with displaying the context information at CCB 314.

However, if the invitation does not contain a context header, or if the context header is a null, then the Current Context assertion will be set to null and the CCB 314 will be left blank. The current context may then be determined via data received from the input device 234 when the user 110 interacts with the input device 234, as will now be described.

It will commonly be the case that, during the course of a communication/interaction, the participants will wish to change contexts. Users 110 will typically be involved in multiple contexts with others users 110 within and without an enterprise and will be shifting their attention between them. Hence, to change contexts, one or more of the users 110 in the communication will select a context identifier from the list displayed in the ACB 316 and cause this identifier to be displayed in the CCB 314 via an interaction with the input device 234 (e.g. by dragging it to the CCB 314 or double clicking on it). If only one user 110 in the communication performs this action, the CM 210 associated with this user 110 may then transmit a message to a CM 210 associated the other participant (or participants), which may then cause the current context of the other participant(s) to also change. In any event, the CM 210 will then cause a Current Context assertion in the tuple space 410 to be set to the selected context and also cause this to be displayed in the CCB 314. Further, any data associated with the new context that is collected while this selected context is active as the current context will be saved to the CO 280 associated with the selected context. This technique may also be used to define a current context when there is either no context header in the invitation, or if the context header is a null.

As described above, in some embodiments, the user 110 may create a new context via activation of the NCB 318. The user 110 will then be prompted for the name of the new context. The new context will be created with a CO 280 created for it in the tuple space 410. The user 110 may also be prompted for other pertinent information such as the purpose, etc. In other embodiments, a new context may be created via the user 110 selecting the field of the CCB 314 via the input device 234, and entering a new context identifier.

While some of the techniques described for determining current context are based on SIP INVITE message in some embodiments, SIP may not be the protocol used in the system 400. For example, rather than SIP, data about a communication may be provided in the Calling Line ID, ANI (Automatic Number Identification) or other signalling constructs. These may also be used to identify a caller and to assist in determining current context. Further a P2P system (e.g. as described below) can also be used to determine current context. However, in embodiments where no information is available to identify the incoming caller, current context can be determined manually, as described above.

In some embodiments, the system 400 is enabled to make a 'best guess' of the initial current context for those systems in which SIP (or equivalent) is not used, or when the context header is not provided or is a null. The tuple space 410 generally retains a history of collaborations and thus stores data which may be processed to make such a best guess, such as in the COs 280, and other assertions. For example, in some embodiments, the tuple space 410 retains an assertion as to the last context that the user 110 used with the caller. In these embodiments, this last context may be set to the current context during the next communication between the user 110 and the caller. In another embodiment, the tuple space 410 is the first context to which the user 110 turned during the last communication with the caller. In these embodiments, this first context may be set to the current context during the next communication between the user 110 and the caller. In yet further embodiments, the tuple space 410 may maintain a data structure in which the cumulative time used for given contexts is stored, for example within each CO 280. In these embodiments, the context that is the most utilized context may be set to the current context during the next communication between the user 110 and the caller, on the assumption that this context is the most important in the caller-user relationship. Other methods of determining current context via a best guess are within the scope of present embodiments.

While many of the embodiments described heretofore reference communications involving voice communication (e.g. telephone calls), context may also be managed for other types of communications, for example, multimedia, IM, Email etc. In these embodiments, the identity of the communicating user may be determined via data received from the communicating user (e.g. in the FROM header of the Email) and the context selected accordingly. In this way the user 110 can see (e.g. by retrieving the CO 280 associated with the context associated with the communication) and interact with the history of the collaboration while viewing the current communication.

Embodiments described heretofore reference communications between users 110 that are human users. However, in other embodiments, context may be managed for communications associated collaboration between a human user and a business process system or automated system, which will generally be referred to as robots. For example, a robot may be enabled to create a context to assist it with scheduling the actions of one or more human users. They robot may be further enabled to create communications (recorded, voice, text etc) that provide information to users 110 as to a current activity in the context supporting the process. Users 110 may view their contexts and maintain the history of activity within the context associated with the robot, and other users 110 or other robots, in order to focus the attention of the user 110.

As described above with reference to COs 280, a context may be associated with a number of participants. Participants will come and go as they are invited into the context, accomplish their designated tasks and drop out of the context. A CO 280, as described above, contains records that detail each of the participants, a description of the context (purpose, participating nodes/computing devices) and a history of the interactions (annotations of specific collaborations). Hence, the CO 280 acts as a central repository that will enable humans, robots and applications to process data in the COs 280 and to interact and collaborate. Thus in some embodiments, a portion of a CO 280 may be dedicated to a specific context belonging to each participant that will contain common information for all participants. For example, every CO 280 for a specific context contains annotations for all calls and other collaborations that have taken place within the specific context. Hence, a supporting application may be enabled to a user 110 with a representation of all calls and/or data that occurred within a specific context. While this has already been described in general above, in a particular non-limiting embodiments, to provide a common basis for all COs 280, each context will be supported by a P2P network linking all users 110. This P2P network may be created, operated and managed in a manner similar to the P2P network described in the Applicants co-pending application "CONFIGURATION OF IP TELEPHONY AND OTHER SYSTEMS ", U.S. Ser. No. 11 /781,319, filed on July 23, 2007 and incorporated herein by reference

The structure of this P2P network, includes an elected master node enabled to receive updates, which in turn distribute the updates to participating nodes (i.e. computing/communication devices and/or servers). A node is generally understood to be a computing device comprising a memory, a communications interface and processor. Each participating node will have a publication/subscribe relationship with the master node. Each participating node will publish any relevant updates to the master node and it will in turn notify all other participating nodes of the update. Hence, COs stored at each participating node may be updated in a similar manner, and hence all participating nodes will have common COs 280 maintained to the same state, and further a CO local to a participating node will be associated COs at other nodes. In some embodiments, this enables a tuple space comprising the COs to be maintained over a plurality of nodes.

By using an elected master node, the problem of race conditions in the maintenance of a state of a CO is addressed. In addition, the amount of bandwidth and processing consumed is reduced. In its simplest form, as known to a person of skill in the art, a race condition is a condition where two processes use a shared resource on a computer at the same time but are dependent upon each other to complete their task. For example, in some embodiments, participating nodes may be elements of a mesh network. In these embodiments, each participating node would notify all other participating nodes of updates. However with participating nodes coming and going, the issue of race conditions arises. It would hence be difficult to ensure that all nodes have the same participant list, and so some COs 280 may miss updates that occur soon after they join a context. The elected master node architecture addresses this issue.

Within this architecture a node may be invited into a context by an initial invitation, for example sent from the master node or another participating node. The invitation, containing a context name that the node has not seen before. The node will thereby create a context/CO for the new context.

The newly created CO can then be linked to the P2P network and thereby receive the common contexts (i.e. data in associated COs stored in other participating nodes). In a SIP-based P2P system, a header can be defined for the invite message that will contain the URL or IP address of the master node: a "Current P2P Master header". Using the URL or IP address, the node can use standard SIP event notification control messages to set up a publish/subscribe relationship with the master node. The node will then be notified of the common content of the other COs 280 and update the local CO 280.

In non-SIP systems, caller ID (or similar information) may be used to identify the source of the incoming invitation. In these embodiments, the node can use a directory (ENUM or other) to determine the URL or IP address that can be used to address the node which originated the incoming invitation. The node will then request (using a SIP notify equivalent or other message), from the node which originated the incoming invitation, the URL or IP address of the current master node. The node can then join the network as described above.

When a node is removed from a context, the node that is being removed may send an update to the other nodes within a list of all participating nodes stored in a local CO,. The node also generally ends the publish/subscribe relationship with the current master node.

A node which creates a context/CO will, in some embodiments, make the first invitation to another node to join the context. The initiating node will declare itself the master node and use this as part of the process of entering the first node into the P2P network. From then on, the P2P network will function as described above, with new master nodes being elected and nodes coming and going, as desired.

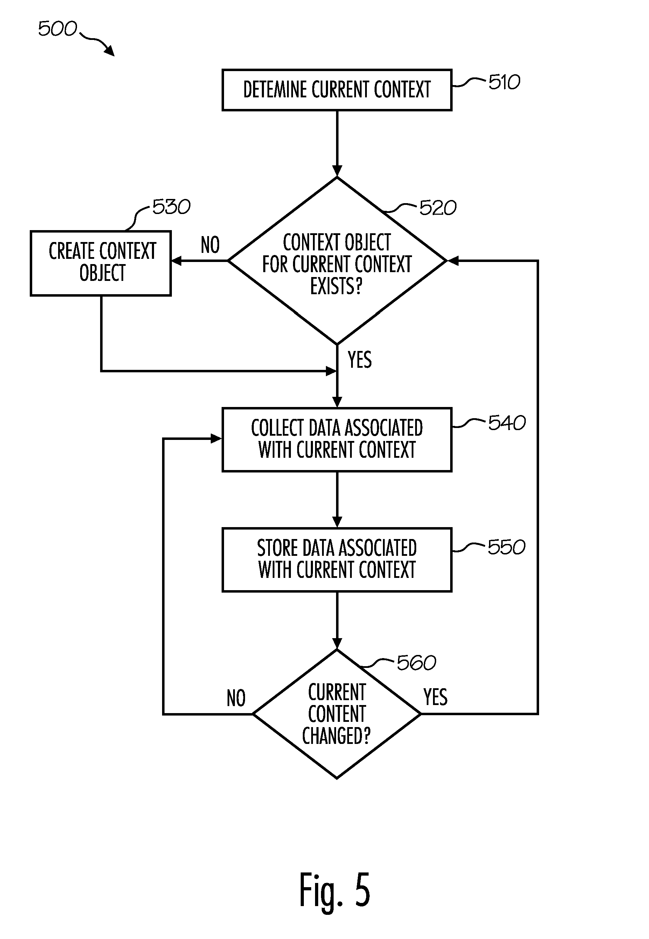

Attention is now directed to Figure 5, which depicts a method 500 of managing context, according to a non-limiting embodiment. In order to assist in the explanation of the method 500, it will be assumed that the method 500 is performed using the system 400. Furthermore, the following discussion of the method 500 will lead to a further understanding of the system 400 and its various components. However, it is to be understood that the system 400 and/or the method 500 can be varied, and need not work exactly as discussed herein in conjunction with each other, and that such variations are within the scope of present embodiments

At step 510 a current context is determined, for example by receiving input data from a user 110 via the input device 234, by receiving a SIP Invite with a context header, or by making a "best guess", as described above. The current context may then be displayed in the CCB 314 as described above, along with any tombstone information.

At step 520, it is determined if a context object, such as a context object 280, associated with the current context exists in a database, such as the tuple space 410 or another database. If the context object does not exist, the context object is created at step 530 in the database. While the current context is active, data associated with said current context is collected at step 540, as described above. At step 550 this data is stored in the context object, thereby creating and/or updating a history of the current context. At step 560, it is determined if the current context has changed, for example by determining if the user 110 has caused a different context identifier to be displayed in the CCB 314, as described above. If not, data continues to be collected at step 540. If so, then at step 520 it is determined if a context object exists for the new current context. Thereafter, the method 500 proceeds as described above. Hence, a user 110 may cause a history and/or updates to a history of a context to be stored in a context object for later reference, for example using an application. The method 500 may end/be interrupted before during or after any step by closing the CM 210, e.g. by closing the representation 295.

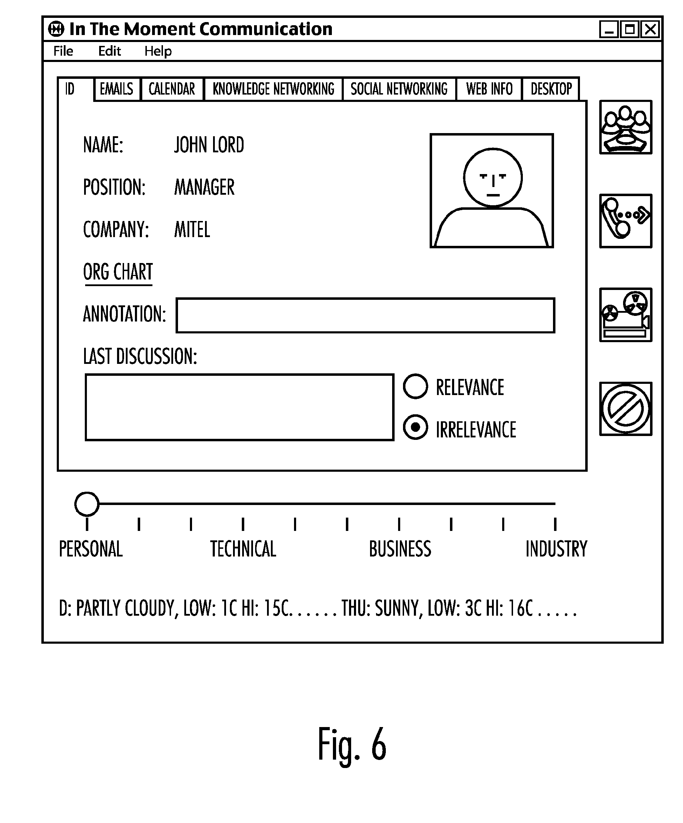

Figures 6 through 11 depict non-limiting embodiments of a graphical user interface (GUI) of an application for managing context, according to a non-limiting embodiment. For example the application may be enabled for processing a CO to present data associated with a context within the GUI, and specifically to control a display device to display such data. The GUI is structured in a tab format such that each tab presents a different view of a context and/or additional information associated with a user of the application. A user may switch between tab views by using a pointing device to "click" on a tab. Figure 6 depicts an ID tab, according to a non-limiting embodiment, which displays information associated with the user of the application, including but not limited to a name, company and position of the user. The tab further comprises an annotation field which allows the user to enter a context identifier. The application received the context identifier and retrieves a CO associated with the context identifier (e.g. from a tuple space or other database). By entering the context identifier the user indicates his/her desire to view the history of the associated context.

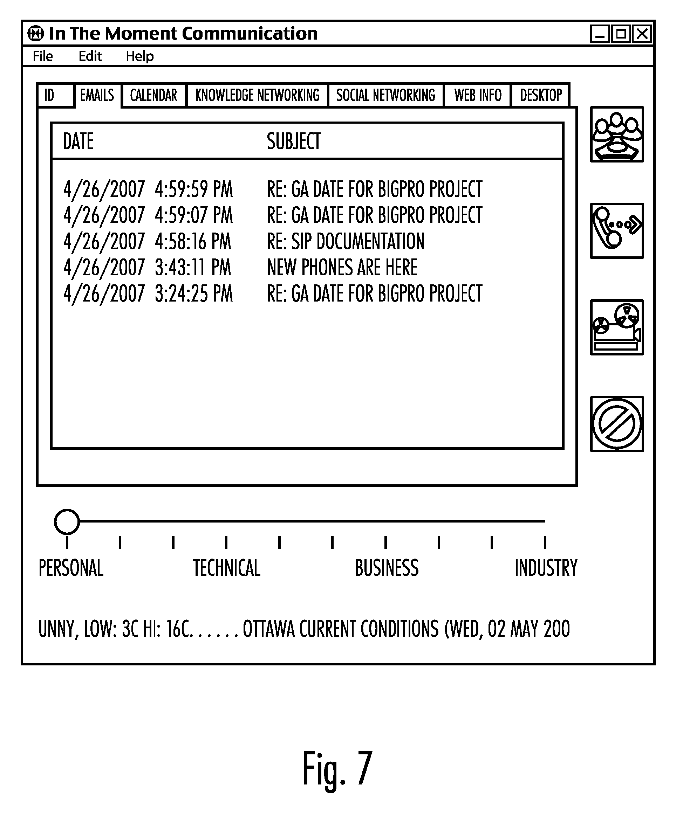

Figure 7 depicts an e-mail tab, according to a non-limiting embodiment, which displays identifiers of e-mails (or other communications) associated with the context entered on the ID tab. For example, identifiers of e-mails stored in the retrieved CO may be displayed on this tab. If the user chooses a particular identifier, the application may be enabled to retrieve the chosen e-mail (either from the CO, if stored there, or at an address stored in association with the identifier in the CO) and display it. Alternatively, the application may cause an e-mail application to open, which will in turn display the chosen e-mail.

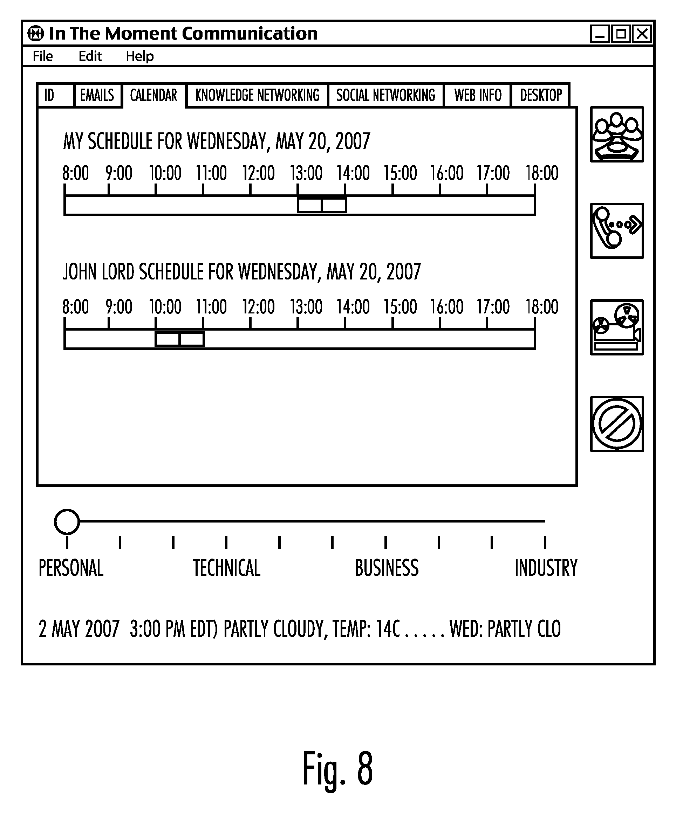

Figure 8 depicts an calendar tab, according to a non-hmiting embodiment, which displays calendar information of users/participants associated with the context entered on the ID tab. For example, the application may process the retrieved CO to determine participants and/or participant identifiers, and retrieve calendar information associated with each participant for display on the calendar tab.

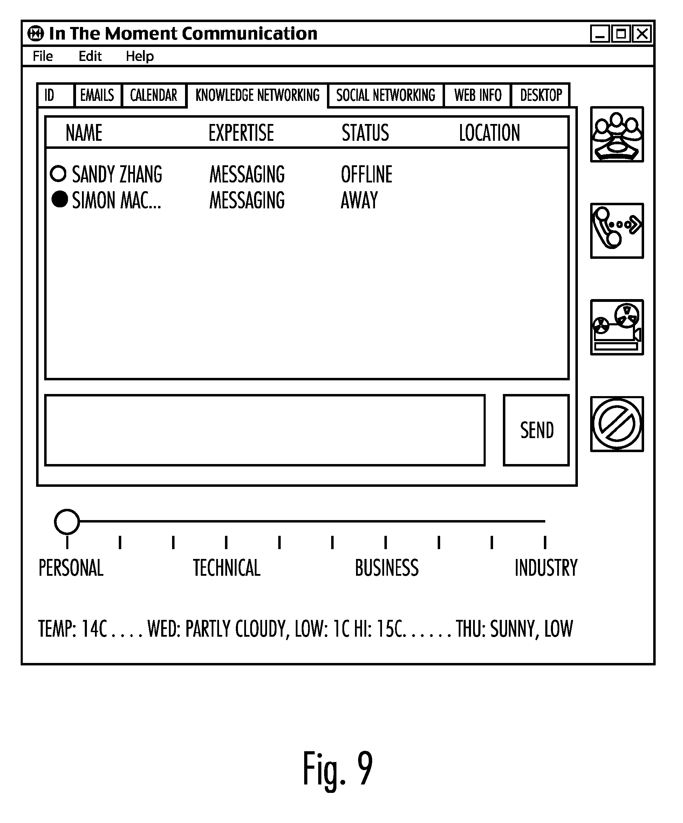

Figure 9 depicts a knowledge networking tab, according to a non-limiting embodiment, which displays identifiers and status of users who have expertise associated with the context entered on the ID tab. For example, the application may process the retrieved CO to determine what expertise is associated with the retrieved CO (in this example, "messaging"), and then initiate a search with an organization database. Names of status (if available) of individuals associated with this expertise in the organization database may then be displayed on the knowledge networking tab.

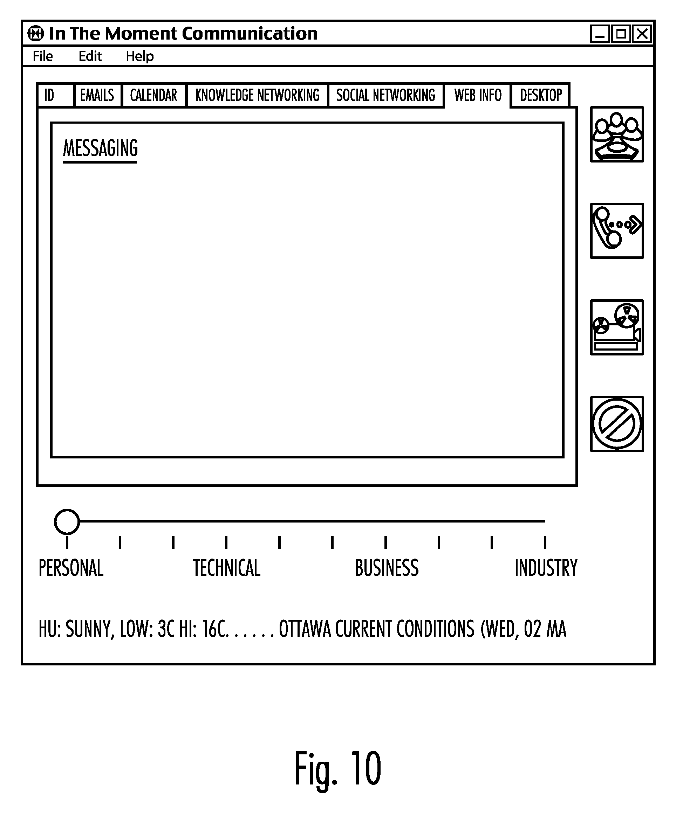

Figure 10 depicts a Web Info tab, according to a non-limiting embodiment, which displays an identifier of the context entered on the ID tab, and in some embodiments all identifiers of contexts that have been entered on the ID tab over a period of time: e.g. the Web Info tab maintains a history of identifiers of contexts entered on the ID tab. A user may initiate a web search by selecting the identifier, which causes the application to trigger a web search, e.g. via a web search application.

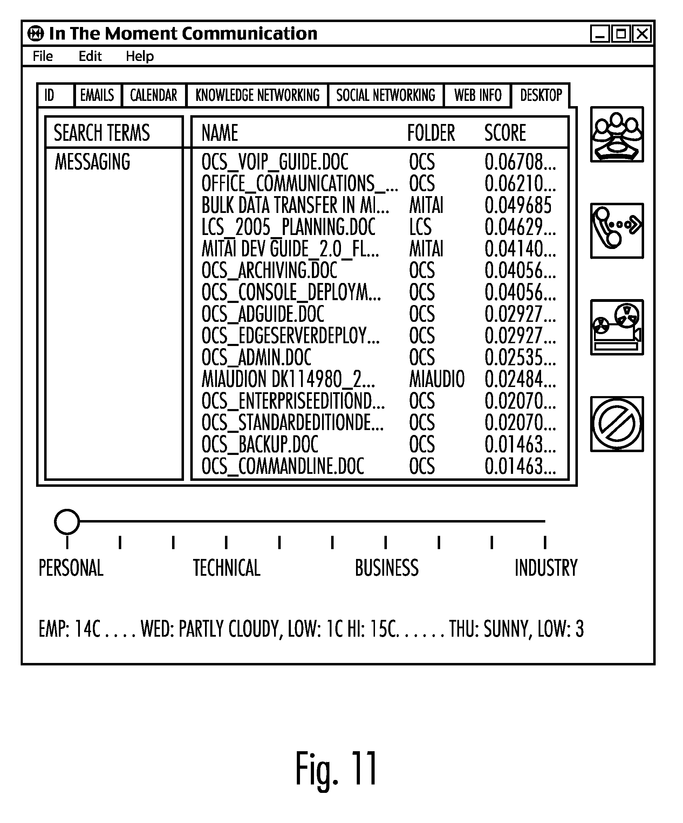

Figure 11 depicts a desktop tab, according to a non-limiting embodiment, which displays identifiers of documents associated with the context entered on the ID tab. Such identifiers may be retrieved, and the documents accessed, in a manner similar to retrieving e-mail identifiers described above with reference to Figure 7.

Those skilled in the art will appreciate that in some embodiments, the functionality of the context manager 210, tuple space 410, the system management agent 420, the relationship assigning agent 430, the context agents 440, the rule assigning agent 450, and the conflict resolving agent 460 may be implemented using preprogrammed hardware or firmware elements (e.g., application specific integrated circuits (ASICs), electrically erasable programmable read-only memories (EEPROMs), etc.), or other related components. In other embodiments, the functionality of the context manager 210, tuple space 410, the system management agent 420, the relationship assigning agent 430, the context agents 440, the rule assigning agent 450, and the conflict resolving agent 460 may be achieved using a computing apparatus that has access to a code memory (not shown) which stores computer-readable program code for operation of the computing apparatus. The computer-readable program code could be stored on a medium which is fixed, tangible and readable directly by these components, (e.g., removable diskette, CD-ROM, ROM, fixed disk, USB drive), or the computer-readable program code could be stored remotely but transmittable to these components via a modem or other interface device connected to a network (including, without limitation, the Internet) over a transmission medium. The transmission medium may be either a non-wireless medium (e.g., optical or analog communications lines) or a wireless medium (e.g., microwave, infrared, free-space optical or other transmission schemes) or a combination thereof.

Persons skilled in the art will appreciate that there are yet more alternative implementations and modifications possible for implementing the embodiments, and that the above implementations and examples are only illustrations of one or more embodiments. The scope, therefore, is only to be limited by the claims appended hereto.

## Claims

1. A method of managing context comprising:
determining a current context;
determining if a context object associated with said current context exists in a shared memory and, if not, creating said context object in said shared memory;
collecting data associated with said current context; and
storing said data associated with said current context in said context object associated with said current context.

2. The method of claim 1, wherein said determining said current context is based on at least one of a communication session, a location and a schedule.

3. The method of claim 1 or claim 2, wherein said determining said current context is based on a communication session and comprises determining a context of at least one previous communication session between two users associated with said communication session.

4. The method of any preceding claim, wherein said determining said current context is based on an input data received via an input device in response to a computing device controlling a display device to display a representation of a request for the current context.

5. The method of claim 4, wherein said request for the current context comprises a list of at least one potential current context, said list of at least one potential current context determined by processing at least one existing context object in said shared memory, and said input data comprises a first selection from said list, and optionally further comprising receiving the input data indicative that a second selection from said list is to be deleted, and in response, deleting a context object associated with said second selection.

6. The method of claim 4, wherein said request for the current context comprises a request to enter a name of said current context, and said input data comprises textual data comprising said name.

7. The method of any preceding claim, wherein said determining said current context is based on a context header in an invitation to a communication session, or determining a "best guess" of an initial current context, or receiving an indication of the context from an automated system enabled to create the context to assist said automated system with scheduling actions of at least one user.

8. The method of any preceding claim, wherein said shared memory comprises at least one of a database and a tuple space, and said determining said current context is based on assertions stored in said shared memory.

9. The method of any preceding claim, wherein said collecting data comprises at least one of collecting data associated with at least one of communications that occur while said current context is active, documents generated while said context is active, a location of a user while said current context is active, activities of said user while said current context is active, and identifiers of other users co-located with said user while said current context is active.

10. The method of any preceding claim, further comprising determining if said current context is active and said collecting occurring if said current context is active, and optionally wherein said determining if said current context is active comprises monitoring an input device for an input data, said input data indicative that said context has changed from said current context to a new current context and, in the absence of said input data, determining that said current context is active.

11. The method of any preceding claim, further comprising synchronizing said context object with at least one associated context object, said context object stored at a first computing device in a network and said at least one associated context object stored at a second computing device in said network, optionally wherein said network comprises a P2P network.

12. A system for managing context comprising
a shared memory for storing a plurality of context objects, each context object comprising data associated with a given context; and
at least one computing device in communication with said shared memory, said computing device comprising:
a communication interface enabled to communicate with said shared memory via a communications network; and
a processor enabled for:
determining a current context;
determining if a context object associated with said current context exists in said shared memory and, if not, creating said context object in said shared memory;
collecting data associated with said current context while said current context is active,; and
storing said data associated with said current context in said context object associated with said current context.

13. The system of claim 12, further comprising at least one knowledge source agent for processing data associated with at least one of a communication session, a location and a schedule to assist in said determining said current context.

14. The system of claim 12 or claim 13, wherein said computing device is coupled to an input device for receiving an input data and a display device for displaying a representation of said current context and a representation of a list of potential current contexts, wherein said current context can change to a potential current context by receiving said input data via said input device, said input data comprising a member of said list.

15. A computing device for managing context, comprising
a communication interface enabled to communicate with said shared memory via a communications network; and
a processor enabled for:
determining a current context;
determining if a context object associated with said current context exists in said shared memory and, if not, creating said context object in said shared memory;
collecting data associated with said current context while said current context is active; and
storing said data associated with said current context in said context object associated with said current context
